Europäisches Patentamt

European Patent Office

Office européen des brevets

(11) Publication number: **0 204 861**
**B1**

# (12) EUROPEAN PATENT SPECIFICATION

(45) Date of publication of patent specification: **27.09.89**

(51) Int. Cl.⁴: **F 16 H 7/18,** F 16 H 7/02

(21) Application number: **85107350.2**

(22) Date of filing: **13.06.85**

(54) **Toothed belt drive between oblique shafts.**

(43) Date of publication of application:
**17.12.86 Bulletin 86/51**

(45) Publication of the grant of the patent:
**27.09.89 Bulletin 89/39**

(84) Designated Contracting States:
**DE FR GB**

(56) References cited:
**DE-A-2 608 818**
**DE-C- 194 837**
**FR-A-1 575 482**
**US-A-1 388 876**

(73) Proprietor: **SIPRO S.R.L.**
**Via della Repubblica 41**
**I-20030 Seveso MI (IT)**

(72) Inventor: **Botton, Giulio**
**Via Giambellino 44**
**I-20146 Milano (IT)**

(74) Representative: **Arena, Giovanni**
**Viale Certosa 135**
**I-20151 Milano (IT)**

Courier Press, Leamington Spa, England.

## Description

The present invention relates to a toothed belt drive to be used between oblique shafts, and particularly between shafts with axis lying on parallel planes and having orthogonal direction.

Such a drive is known, for example, from French Patent N. 1.575.482, in which only one reaction and guide roller is used to act on the back of one branch of the toothed belt.

At very high revolving speed such a toothed belt drive between oblique shafts causes wear of the belt in a short time.

Therefore, drives between oblique or orthogonal shafts result, substantially solved by way of various complex and expensive kinematic systems.

The present device further develops toothed belt drives between oblique shafts to allow the use even when operating at very high revolving speed.

According to the invention the toothed belt drive presents the features as specified in following Claim 1 and 2 respectively.

In order that the invention may be better understood, an embodiment thereof will now be described by way of example only and with reference to the accompanying drawings in which:

Fig. 1) is a view of a drive with toothed belt between two gears with orthogonal axis of rotation and two opposite tension rollers;

Fig. 2) is a side view of rollers 16 and 19 of Fig. 1, sectioned respectively by planes passing through the axis 17—20 and perpendicular to the plane of Fig. 1.

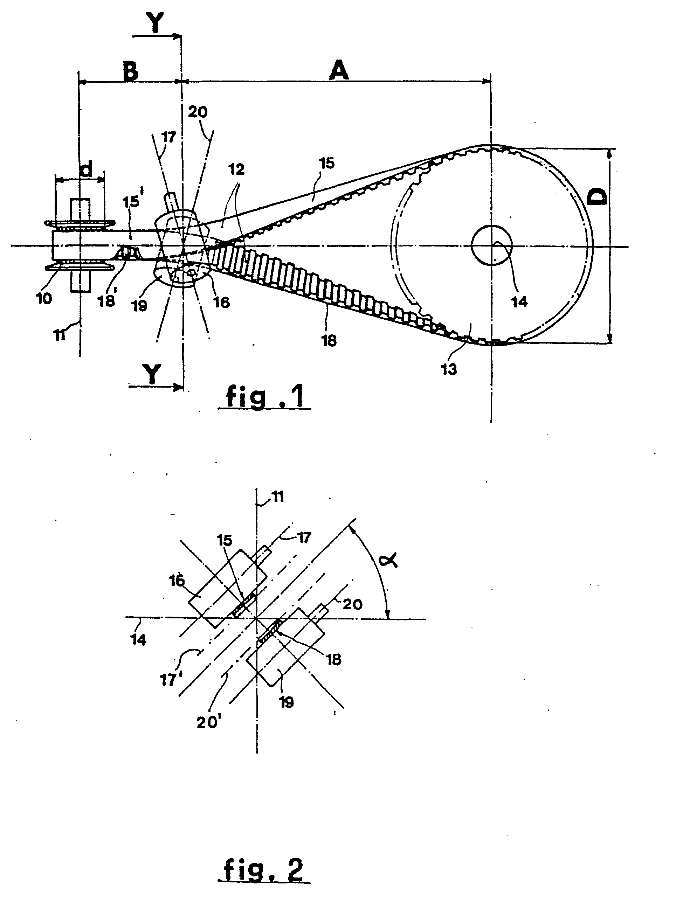

According Fig. 1, gear 10, through toothed belt 12, drives the gear 13, whose rotating axis 14 is orthogonal to the driving gear axis 11. Reaction and guide roller 16, operating on branch 15—15' of the toothed belt, has the rotation axis 17 almost lined up with the geometric axis 17' of teeth of such branch, when they pass on the centre of the roller contact area (Fig. 2).

Also reaction and guide roller 19, acting on the other branch 18—18' of the toothed belt, has the rotation axis 20 lined up with the geometric axis 20' of the teeth of said branch, when passing on the centre of its contact area.

As shown in Fig. 2, the projections of axes 17 and 20 on a plane perpendicular to the line joining the centres of the two gears, form an angle $\alpha$ of about 45° with the projections of axis 11 and 14 on the same plane.

Each roller is opposite to one another and the projection of their centre on the said joining line has distances from the centres of gears 10 and 13 whose ratio is almost equal to the ratio existing between the outer diameters of the respective gears. Accordingly, B can be equated to the expression $d(A + B)/(d + D)$.

During operation, the rotation of gear 10 causes the driving of gear 13 through the toothed belt 12. As the two shafts 11 and 14 are orthogonal to each other, the teeth of the belt would tend to go away from the respective teeth of the gears and to assume a determined angularity with respect to the same teeth. Roller 16 avoids that and, acting on branch 15 and 15', keeps the teeth of the belt opposite to those of the gears at nearly the same alignment. Roller 19 has a similar behaviour on the other branch 18 and 18'.

By means of this drive the same "mesh" between toothed belt and the thereby linked gears occurring between parallel shafts is still granted by oblique and orthogonal shafts, without valuable wearing phenomena of the belt. Revolving speeds higher than 20,000 revolutions per minute have been reached without particular inconvenience. This means a remarkable increase of possibilities to use toothed belts with all their advantages of simplicity, saving, noiselessness and reliability.

Naturally the solution implemented in the above embodiment is subject to modifications always falling within the scope of the invention. In fact, instead of using a single pair of rollers 16, 19, more pairs of rollers may be provided. In such a case the rollers have to satisfy the conditions pointed out in following claim 1.

## Claims

1. Toothed belt drive between oblique shafts, each shaft carrying a gear (10, 13) over which a toothed belt (12) is looped, reaction and guide rollers being located between said two gears and acting on the back of each of the two branches of said belt (12), wherein:
— the projection of the axis of each roller on a plane perpendicular to the line joining the centres of the two gears has a direction substantially intermediate, for each branch of the belt, to that of the immediately preceding roller or shaft and to that of the immediately following roller or shaft;
— the roller closest to the smaller gear (10) of said two gears, in each branch of the belt, has a distance from said joining line which is inferior to the radius of said smaller gear;
— the projection of the centre of said closest roller on said joining line has a distance from the centre of the smaller gear which is inferior or substantially equal to the value of the expression $Ld/(d + D)$ with L being the distance between the centres of the two gears and d and D being diameters of the smaller and the larger gear respectively;
— the inclination of the axis of each roller from said plane perpendicular to said joining line is so chosen that the roller axis is lined up with the belt teeth passing on the centre of the roller contact area.

2. Toothed belt drive between oblique shafts, each shaft carrying a gear (10, 13) over which a toothed belt (12) is looped, two reaction and guide rollers (16, 19) being located between said two gears, the one reaction and guide roller (16) acting on the back of the one branch and the other reaction and guide roller (19) acting on the back of the other branch of the belt, wherein:

— each roller has a distance from the line joining the centres of the two gears which is inferior to the radius of the smaller gear (10) of said two gears;

— the projection of the centre of each roller (16, 19) on said joining line has a distance from the centre of the smaller gear (10) which is substantially equal to the value of the expression Ld/(d + D) with L being the distance between the centres of the two gears and d and D being diameters of the smaller and the larger gear respectively;

— the axis of said two rollers (16, 19) are so positioned oppositely that a straight line joining their centres substantially crosses said line joining the centres of the two gears;

— the projection of the axis of each roller on a plane perpendicular to said line joining the centres of the gears are parallel.

## Patentansprüche

1. Zahnriemenantrieb zwischen schräg eingestellten Wellen, von denen jede Welle ein von einem Zahnriemen (12) umschlungenes Zahnrad (10, 13) trägt, mit zwischen den beiden Zahnrädern befindlichen Gegendruck- und Führungsrollen, die auf die Rückseite beider Zweige des Riemens (12) wirken, wobei

— die Projektion der Achse jeder Rolle auf eine Ebene, die senkrecht zu der die Zentren der beiden Zahnräder verbindenden Linie liegt, eine Richtung hat, die für jeden Riemenzweig im wesentlichen zwischen derjenigen der unmittelbar vorhergehenden Rolle oder Welle und derjenigen der unmittelbar nachfolgenden Rolle oder Welle liegt;

— die dem kleineren (10) der beiden Zahnräder am nächsten liegende Rolle in jedem Riemenzweig eine Entfernung von der genannten Verbindungslinie hat, die geringer ist als der Radius dieses kleineren Zahnrads;

— die Projektion des Zentrums der genannten nächstliegenden Rolle auf die genannte Verbindungslinie eine Entfernung von dem Zentrum des kleineren Zahnrads hat, die geringer als oder im wesentlichen gleich dem Wert des Ausdrucks Ld/(d + D) ist, in dem L die Entfernung zwischen den Zentren der beiden Zahnräder und d und D Durchmesser des kleineren bzw. des größeren Zahnrads bedeuten;

— die Neigung der Achse jeder Rolle gegen die gennante, zu der Verbindungslinie senkrechte Ebene so gewählt ist, daß die Rollenachse mit den auf dem Zentrum der Rollenberührungsfläche vorbeilaufenden Riemenzähnen fluchtet.

2. Zahnriemenantrieb zwischen schräg eingestellten Wellen, von denen jede Welle ein von einem Zahnriemen (12) umschlungenes Zahnrad (10, 13) trägt, mit zwei zwischen den beiden Zahnrädern befindlichen Gegendruck- und Führungsrollen (16, 19), von denen die eine Gegendruck- und Führungsrolle (16) auf die Rückseite des einen Zweiges und die andere Gegendruck- und Führungsrolle (19) auf die Rückseite des anderen Zweiges des Riemens wirkt, wobei:

— jede Rolle von der die Zentren der beiden Zahnräder verbindenden Linie eine Entfernung hat, die geringer ist als der Radius des kleineren (10) der beiden Zahnräder;

— die Projektion des Zentrums jeder Rolle (16, 19) auf die genannte Verbindungslinie eine Entfernung von dem Zentrum des kleineren Zahnrads (10) hat, die im wesentlichen gleich dem Wert des Ausdrucks Ld/(d + D) ist, in dem L die Entfernung zwischen den Zentren der beiden Zahnräder und d und D Durchmesser des kleineren bzw. des größeren Zahnrads bedeuten;

— die Achsen der beiden Rollen (16, 19) derart gegenüberliegend positioniert sind, daß eine ihre Zentren verbindende gerade Linie im wesentlichen die die Zentren der beiden Zahnräder verbindende Linie kreuzt;

— die Projektionen der Achsen der Rollen auf eine Ebene, die senkrecht zu der die Zentren der Zahnräder verbindenden Linie liegt, parallel sind.

## Revendications

1. Transmission à courroie crantée entre arbres obliques, chaque arbre portant une roue dentée (10, 13) dans laquelle une courroie crantée (12) forme une boucle, des galets de réaction et de guidage disposés entre lesdites deux roues dentées et agissant sur le dos de chacune des deux branches de ladite courroie (12), dans laquelle:

— la projection de l'axe de chaque galet sur un plan perpendiculaire à la ligne joignant les centres des deux roues dentées possède une direction sensiblement intermédiaire, pour chaque branche de la courroie, entre celle du galet ou de l'arbre immédiatement précédent et celle du galet ou de l'arbre immédiatement suivant;

— le galet le plus proche de la plus petite (10) desdites deux roues dentées, dans chaque branche de la courroie, se trouve à une distance de ladite ligne de jonction qui est inférieure au rayon de ladite roue dentée plus petite;

— la projection du centre dudit galet le plus proche sur ladite ligne de jonction se trouve à une distance du centre de la roue dentée plus petite qui est inférieure ou sensiblement égale à la valeur de l'expression Ld/(d + D), L étant la distance entre les centres des deux roues dentées et d et D étant des diamètres de la plus petite et de la plus grande des roues dentées, respectivement;

— l'inclinaison de l'axe de chaque galet à partir dudit plan perpendiculaire à ladite ligne de jonction est choisie de façon que l'axe du galet soit aligné avec les dents de la courroie passant sur le centre de la zone de contact du galet.

2. Transmission à courroie crantée entre arbres obliques, chaque arbre portant une roue dentée (10, 13) sur laquelle une courroie crantée (10) forme une boucle, deux galets (16, 19) de réaction et de guidage étant disposés entre lesdites deux roues dentées, le premier galet (16) de réaction et de guidage agissant sur le dos de la première branche et l'autre galet (19) de réaction et de guidage agissant sur le dos de l'autre branche de la courroie, dans laquelle:

— chaque galet est à une distance de la ligne joignant les centres des deux roues dentées qui est inférieure au rayon de la plus petite (10) desdites deux roues dentées;

— la projection du centre de chaque galet (16, 19) sur ladite ligne de jonction se trouve à une distance du centre de la roue dentée plus petite (10) qui est sensiblement égale à la valeur de l'expression $Ld/(d + D)$, L étant la distance entre les centres des deux roues dentées et d et D étant les diamètres des roues dentées plus petite et plus grande, respectivement;

— les axes desdits deux galets (16, 19) sont placés en opposition telle qu'une ligne droite joignant leurs centres coupe sensiblement ladite ligne joignant les centres des deux roues dentées;

— les projections des axes des deux galets sur un plan perpendiculaire à ladite ligne joignant les centres des roues dentées sont parallèles.

fig .1

fig. 2

1